# EUROPEAN PATENT APPLICATION

(11) **EP 1 569 221 A1**
(43) Date of publication of application: **31.08.2005**
(21) Application number: 05100919.9
(22) Date of filing: 09.02.2005
(51) Int. Cl.: G11B 19/04, H04M 1/02

(54) **Portable information terminal and control method of portable information terminal**

(30) Priority: 26.02.2004 JP 2004052361
(71) Applicant: KABUSHIKI KAISHA TOSHIBA, Tokyo 105-8001 (JP)
(72) Inventor: Shimomura, Kazuhito, Toshiba Corporation, Minato-ku, Tokyo 105-8001 (JP)
(74) Representative: Henkel, Feiler & Hänzel

(57) **Abstract**

An open/closed state detecting unit (41) detects in which one of an open state, a closed state, and an intermediate state a portable information terminal (10) is, and the operation of a magnetic disk (32) is controlled based on the detection result. Opening/closing a cover (12) relative to a main body (10) generates an impact. Since this impact occurs when the cover (12) shifts from the intermediate state to the open state or to the closed state, detecting the open/closed state of the cover (12) by the open/closed state detecting unit (41) and controlling the magnetic disk (32) according to the detection result makes it possible to protect the magnetic disk (32) from the impact.

## Description

### Cross-reference to the Invention

This application is based upon and claims the benefit of priority from the prior Japanese Patent Application No. 2004-052361, filed on February 26, 2004; the entire contents of which are incorporated herein by reference.

### Background of the Invention

### 1. Field of the Invention

The present invention relates to a portable information terminal having a magnetic disk drive and to a control method of a portable information terminal.

### 2. Description of the Related Art

It is conceivable for a cellular phone to have, besides a telephone function, functions of, for example, enabling a user to enjoy audio/visual contents. In order to realize the audio/visual functions, it is necessary for a cellular phone to have a large-capacity memory device. Therefore, a possible way therefor is to mount a magnetic disk device on a cellular phone.

The magnetic disk device has a magnetic head disposed near a magnetic disk that rotates at high speed, thereby reading/writing information from/to the magnetic disk. Therefore, when the magnetic head comes in contact with the magnetic disk, either the magnetic disk or the magnetic head is damaged, which may possibly result in breakage of the magnetic disk device.

Incidentally, an art is disclosed in which a hold detecting mechanism is provided in a portable device with a built-in magnetic disk device, and when this hold detecting mechanism detects that the portable device is not held by hand, the magnetic head is retracted (see Japanese Patent Laid-open Application No. 2002-251857). The magnetic disk device is protected from an impact which occurs, for example, when the device drops from the hand.

### Summary of the Invention

This method, however, is not capable of solving the problem of an impact that occurs when a folding cellular phone or the like is opened/closed.

In view of the above, it is an object of the present invention to provide a portable information terminal and a control method of a portable information terminal in which a magnetic disk is protected from an impact at the time of an opening/closing operation.

A portable information terminal according to one of the aspects of the present invention includes: a main body; a cover openable/closable relative to the main body; a magnetic disk device having a magnetic disk; an open/closed state detecting unit that detects in which one of an open state, a closed state, and an intermediate state the cover is relative to the main body; and a controller controlling an operation of the magnetic disk device based on a result of the detection by the open/closed state detecting unit.

The open/closed state detecting unit detects in which one of the open state, the closed state, and the intermediate state the cover is, and the operation of the magnetic disk device is controlled based on the result of the detection. When the cover is opened/closed relative to the main body, an impact occurs. Since this impact occurs when the cover shifts from the intermediate state to the open state or to the closed state, detecting the open/closed state of the cover by the open/closed state detecting unit and controlling the magnetic desk device according to the detection result make it possible to protect the magnetic disk device from the impact.
(1) Here, the open/closed state detecting unit may have: a first detector that detects whether or not the cover is in the open state relative to the main body; and a second detector that detects whether or not the cover is in the closed state relative to the main body.
   The detection of the open state, the closed state, and the intermediate state is realized by the first and second detectors detecting whether or not the current state is the open state and the closed state respectively.
(2) The controller may permit read/write of information from/to the magnetic disk when the open/closed state detecting unit detects that the cover is in one of the open state and the closed state, and may prohibit the read/write of the information from/to the magnetic disk when the open/closed state detecting unit detects that the cover is in the intermediate state.
   Typically, the intermediate state occurs in the course of the shift from one of the open state and the closed state to the other state. Therefore, prohibiting the read/write of information from/to the magnetic disk when the intermediate state is detected makes it possible to protect the magnetic disk from the impact at the time of the shift of the state. When this shift is finished, the open state or the closed state is detected, and the read/write of information from/to the magnetic disk is permitted.
(3) The portable information terminal may further include a memory, and when the open/closed state detecting unit detects that the cover is in the intermediate state, the controller may control, such that information is read/written from/to the memory instead of the magnetic disk.

The use of the memory in place of the magnetic disk facilitates continuing processing even in the statewhere accesses to the magnetic disk are prohibited.

Here, the controller may control such that the information in the memory is written to the magnetic disk when the open/closed state detecting unit detects that the cover has shifted from the intermediate state to one of the open state and the closed state.

Writing the information in the memory, which has been used in place of the magnetic disk, to the magnetic disk when the intermediate state has been shifted to one of the open state and the closed state enables the return to the processing state in which the magnetic disk is used.

A control method of a portable information terminal according to another aspect of the present invention is a control method of a portable information terminal that includes: a main body; a cover openable/closable relative to the main body; and a magnetic disk device having a magnetic disk, and the control method includes: detecting in which one of an open state, a closed state, and an intermediate state the cover is relative to the main body; and controlling an operation of the magnetic disk device based on a result of the detection.

### Brief Description of the Drawings

Fig. 1A is a perspective view showing a portable information terminal according to a first embodiment of the present invention in an open state.
Fig. 1B is a perspective view showing the portable information terminal according to the first embodiment of the present invention in an intermediate state.
Fig. 1C is a perspective view showing the portable information terminal according to the first embodiment of the present invention in a closed state.
Fig. 2 is a block diagram showing an internal structure of the portable information terminal according to the first embodiment of the present invention.
Fig. 3 is a table showing the correspondence relation between the open/closed states of the portable information terminal according to the first embodiment of the present invention and the detection states in an open state detecting switch and a closed state detecting switch.
Fig. 4 is a flowchart showing an example of an operation procedure of the portable information terminal according to the first embodiment of the present invention.
Fig. 5 is a perspective view showing a portable information terminal according to a second embodiment of the present invention.
Fig. 6A is an enlarged side view showing the vicinity of a hinge when the portable information terminal according to the second embodiment of the present invention is in an open state.
Fig. 6B is an enlarged side view showing the vicinity of the hinge when the portable information terminal according to the second embodiment of the present invention is in a closed state.
Fig. 7 is a perspective view showing a portable information terminal according to a third embodiment of the present invention.
Fig. 8 is an enlarged view showing a revolving mechanism.
Fig. 9 is a perspective view showing a portable information terminal according to a fourth embodiment of the present invention.

### Description of the Embodiments

Hereinafter, embodiments of the present invention will be described in detail with reference to the drawings.

### (First Embodiment)

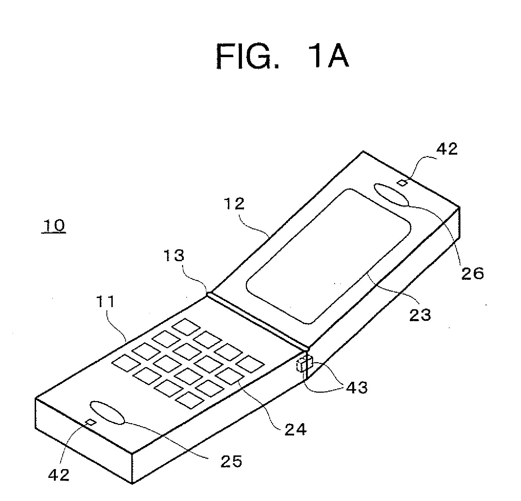

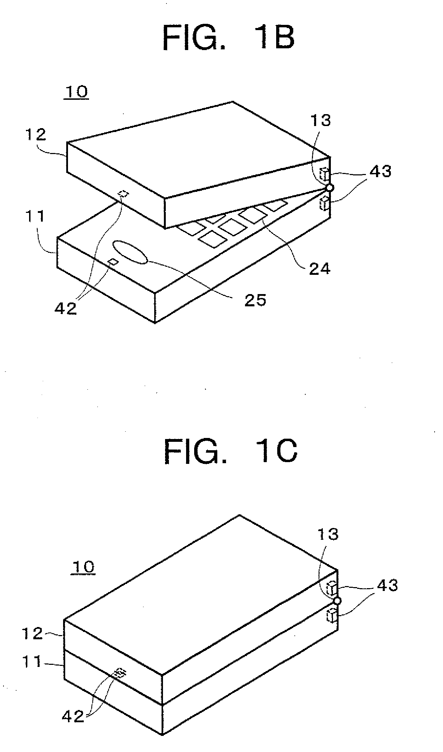

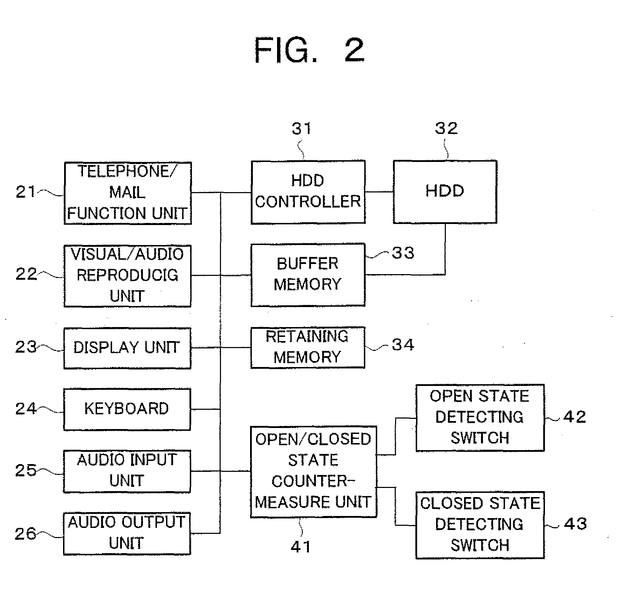

Fig. 1A, Fig. 1B, and Fig. 1C are perspective views showing a portable information terminal 10 according to a first embodiment of the present invention in an open state, an intermediate state, and a closed state respectively. Fig. 2 is a block diagram showing an internal structure of the portable information terminal 10. The portable information terminal 10 is, for example, a cellular phone, and Fig. 1A to Fig. 1C show a folding cellular phone.

The portable information terminal 10 is divided into a portable information terminal main body 11 and a cover 12. These components may be called a casing for a keyboard arrangement block and a casing for a display block respectively. The portable information terminal main body 11 and the cover 12 are revolvably connected to each other by a hinge 13. As a result, the portable information terminal 10 takes three states, namely, a state in which the cover 12 is opened (open state: Fig. 1A), a state in which the cover 12 is closed (closed state: Fig. 1C), and a state therebetween (intermediate state: Fig. 1B). The open state and the closed state are kept as they are by a ratchet mechanism (not shown) provided in the hinge 13.

As shown in Fig. 1A to Fig. 1C and Fig. 2, the portable information terminal 10 includes a telephone/mail function unit 21, a visual/audio reproducing unit 22, a display unit 23, a key board 24, an audio input unit 25, an audio output unit 26, a hard disk drive controller (HDD controller) 31, a hard disk drive (HDD) 32, a buffer memory 33, a retaining memory 34, an open/closed state countermeasure unit 41, an open state detecting switch 42, and a closed state detecting switch 43.

The telephone/mail function unit 21 enables exchange of calls and mails between the portable information terminal 10 and other telephone sets and it includes an antenna (not shown). The visual/audio reproducing unit 22 enables viewing and listening to visual and audio contents stored in the hard disk drive 32 through the display unit 23 and the audio output unit 26.

The display unit 23 is a display means such as a liquid crystal display. The keyboard 24 is an information input means such as a ten-key pad. An audio input unit 25 is an audio input device such as a microphone.

The audio output unit 26 is an audio output device such as a speaker. Besides, external output terminals outputting an audio signal (an earphone jack and an external speaker terminal) may be provided. A user can select a speaker, an earphone, an external speaker, or the like as required as an audio output destination.

The hard disk drive controller (HDD controller) 31 controls the read/write of information from/to the hard disk drive 32. The hard disk drive (HDD) 32 is a magnetic disk device for storing various contents (video, audio (music, movies, and the like), and programs (games and the like)). The hard disk drive 32 includes a magnetic disk and a magnetic head and it reads/writes information from/to the magnetic disk by the magnetic head.

The buffer memory 33 is a memory for exchanging data with the hard disk drive 32. The retaining memory 34 is a memory for retaining information necessary for the telephone/mail function unit 21, the visual/audio reproducing unit 22, and so on.

The open/closed state countermeasure unit 41 performs processing (retraction control and the like) for protecting the hard disk drive 32 via the hard disk drive controller 31 according to the open/closed state of the cover 12. The open state detecting switch 42 is a switch for detecting whether or not the cover 12 is in the open state. The closed state detecting switch 43 is a switch for detecting whether or not the cover 12 is in the closed state.

In the portable information terminal 10, the telephone/mail function unit 21 enables calls and mails, and in addition, the visual/audio reproducing unit 22 enables viewing images and listening to sounds (for example, music and movies). For using the telephone/mail function and viewing images, the portable information terminal 10 is brought into the open state. When not in use, the portable information terminal 10 is brought into the closed state. Sounds (for example, music) can be listened to both in the open state and in the closed state.

Thus, the portable information terminal 10 is used in the open/closed state according to its intended use. When a user opens/closes the cover 12, the open/closed state of the portable information terminal 10 shifts from the open state to the closed state or vice versa. An impact is applied to the hard disk drive 32 when the cover 12 is opened/closed. The impact given to the hard disk drive 32 is especially strong when the state of the cover 12 shifts to be stabilized in the open/closed state.

The open state detecting switch 42 is composed of a pair of constituent elements (for example, contacts) disposed on the portable information main body 11 side and the cover 12 side respectively. As the open state detecting switch 42, either of a contact-type switch based on the contact between the pair of constituent elements (for example, a contact switch) and a non-contact switch not based on the contact between the constituent elements (for example, a magnet switch) is usable. When the portable information terminal 10 is in the open state, the constituent elements of the open state detecting switch 42 are in contact with or are proximate to each other (detection of the open state), and when the portable information terminal 10 is not in the open state, the constituent elements are apart from each other (non-detection of the open state). Note that the contacts in the open state may be either ON or OFF as long as the open state detecting switch 42 is capable of detecting the open state. That is, it suffices if the open state can be detected according to the state of the open state detecting switch 42.

The closed state detecting switch 43 is also composed of a pair of constituent elements disposed on the portable information terminal main body 11 side and on the cover 12 side respectively. The closed state detecting switch 43 may be a contact-type switch based on the contact between the pair of constituent elements (for example, a contact switch) or may be a non-contact switch not based on the contact between the constituent elements (for example, a magnet switch). When the portable information terminal 10 is in the closed state, the constituent elements of the closed state detecting switch 43 are in contact with or are proximate to each other (detection of the closed state), and when the portable information terminal 10 is not in the closed state, the constituent elements are apart from each other (non-detection of the closed state). Note that the contacts in the closed state may be either ON or OFF as long as the closed state detecting switch 43 is capable of detecting the closed state. That is, it suffices if the closed state can be detected according to the state of the closed state detecting switch 42.

The open state detecting switch 42 and the closed state detecting switch 43 are combined, so that it can be detected in which one of the open state, the closed state, and the intermediate state the portable information terminal 10 is.

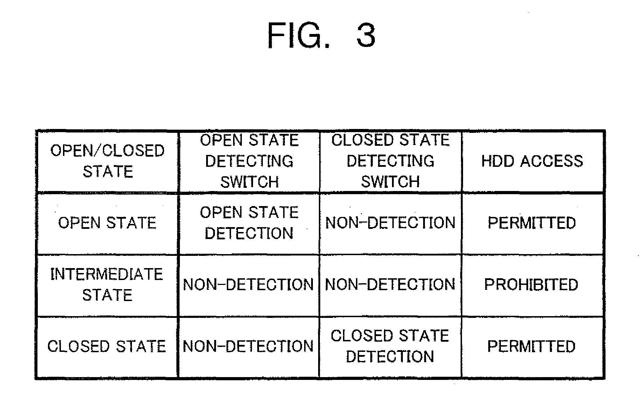

Fig. 3 is a table showing the correspondence relation between the open/closed states of the portable information terminal 10 and the detection states of the open state detecting switch 42 and the closed state detecting switch 43.

When the open state detecting switch 42 detects the open state, the portable information terminal 10 is in the open state, and at this time, the closed state detecting switch 43 does not detect the closed state. In this case, accesses to the hard disk drive 32 (read/write of information) are permitted.

When the closed state detecting switch 43 detects the closed state, the portable information terminal 10 is in the closed state, and at this time, the open state detecting switch 42 does not detect the open state. In this case, accesses to the hard disk drive 32 (read/write of information) are also permitted.

When the open state detecting switch 42 and the closed state detecting switch 43 are both in a non-detection state, the portable information terminal 10 is in the intermediate state. In this case, accesses to the hard disk drive 32 (read/write of information) are prohibited.

### (Operations of Portable Information Terminal 10)

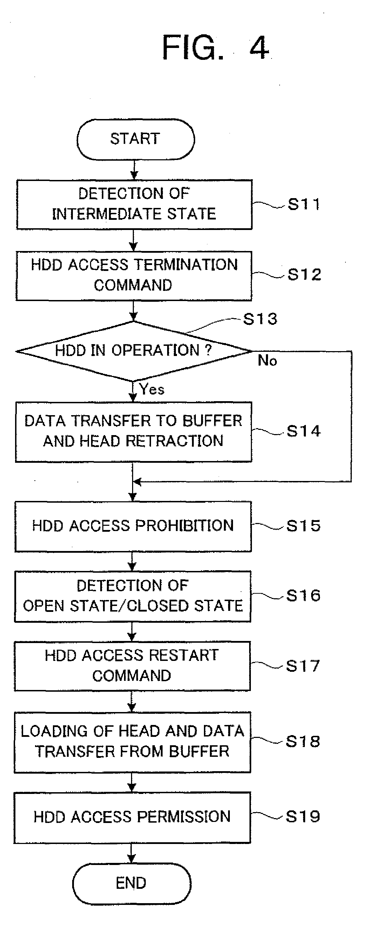

Fig. 4 is a flowchart showing an example of an operation procedure of the portable information terminal 10.
(1) The portable information terminal 10 is opened/closed, so that the intermediate state is detected (Step S11).
   When the open state detecting switch 42 does not detect the open state nor does the closed state detecting switch 43 detect the closed state, the intermediate state is detected. As a possible operation in this case, for example, the portable information terminal 10 is shifted from the open state to the closed state with an intention of starting the use of the portable information terminal 10. Specific purposes of this operation are telephone calls, mail transmission/receipt, viewing/listening to images and sounds. As another possible operation, the portable information terminal 10 is shifted from the open state to the closed state when the use of the portable information terminal 10 is to be finished. The portable information terminal 10 is shifted from the open state to the closed state also for listening to sound (for example, music). This is because sound can be listened to both in the open state and the closed state of the portable information terminal 10.
(2) In response to the detection of the intermediate state, the open/closed state countermeasure unit 41 issues to the hard disk drive controller 31 a command for terminating accesses to the hard disk drive 32 (Step S12). This is intended for protecting the hard disk drive 32 from an impact caused by the opening/closing operation.
   If data is being read from the hard disk drive 32 at this time, this data is stored in the buffer memory 33 or is stored in the retaining memory 34 that is under control of the open/closed state countermeasure unit 41. If the magnetic head of the hard disk drive 32 is on the magnetic disk (medium), the magnetic head is retracted (Steps S13, S14).
(3) Thereafter, the state where accesses to the hard disk drive 32 are prohibited continues (Step S15).
   The above-described access termination is intended mainly for avoiding the existence of the magnetic head on the magnetic disk (medium). Therefore, as long as this state is maintained, the rotation and the like of the magnetic disk of the hard disk drive 32 are permitted. The level of such access termination (prohibition) can be stored in a storage means such as a memory or a register as a setting condition for the open/closed state countermeasure unit 41.
   Here, information read/write from/to the buffer memory 33 or the retaining memory 34 in place of the hard disk drive 32is allowed. Therefore, a work can be continued as long as the read of new data from the hard disk drive 32 is not required. For example, the playback of music can be continued, using data stored in the buffer memory 33.
   The termination (prohibition) of the accesses to the hard disk drive 32 ensures that the magnetic head does not exist on the magnetic disk (medium), so that the hard disk drive 32 is protected from the impact that is given when the portable information terminal 10 is opened/closed. The retraction operation of the magnetic head takes several 10 msec, which allows an operator to open/close the portable information terminal 10 without any special attention.
(4) When the opening/closing operation of the portable information terminal 10 is finished, it is detected that the intermediate state has been shifted to the open state or to the closed state (Step S16).
   The open state and the closed state are respectively detected by the open state detecting switch 42 and the closed state detecting switch 43.
   Note that the open state or the closed state at this time is maintained by the ratchet mechanism of the hinge 13.
(5) In response to the detection of the open state or the closed state, the open/closed state countermeasure unit 41 issues to the hard disk drive controller 31 a command for restarting accesses to the hard disk drive 32 (Step S17). Incidentally, it is also conceivable to provide a slight time lag between the detection and the command. This is because there generally is a slight time lag between the shift of the state and the subsiding of the impact.

When necessary, the magnetic head of the hard disk drive 32 is loaded on the magnetic disk (medium) again. Further, the data stored in the buffer memory 33 or the retaining memory 34 istransferred to the hard disk drive 32 (Step S18). As a result, processing using the hard disk drive 32 can be continued.

Thereafter, the state in which accesses to the hard disk drive 32 are permitted continues (Step S19).

As described above, it is possible to retract the magnetic head before the impact force caused by the opening/closing operation of the portable information terminal 10 is given to the hard disk drive 32.

A user of the portable information terminal 10 opens/closes the portable information terminal 10 when using the functions of telephone, mail, and the like. At this time, if the hard disk drive 32 is in operation, a vibration impact force accompanying this opening/closing operation is applied to the hard disk drive 32.

The intermediate state is detected by the combination of the open state detecting switch 42 and the closed state detecting switch 43, so that the occurrence of the impact caused by the opening/closing operation is expected in advance and this is directly and indirectly warned to the hard disk drive 32. As a result, it is possible to prevent a crash of the magnetic head and the magnetic disk to improve reliability of the hard disk drive 32, resulting in improved reliability of the portable information terminal 10.

### (Second Embodiment)

A portable information terminal 10a according to a second embodiment of the present invention will be described.

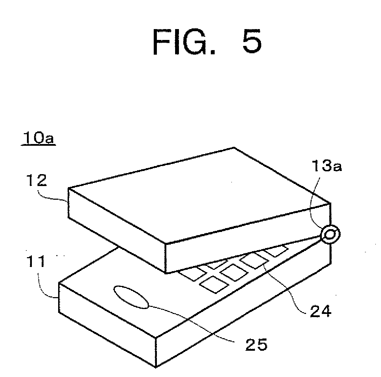

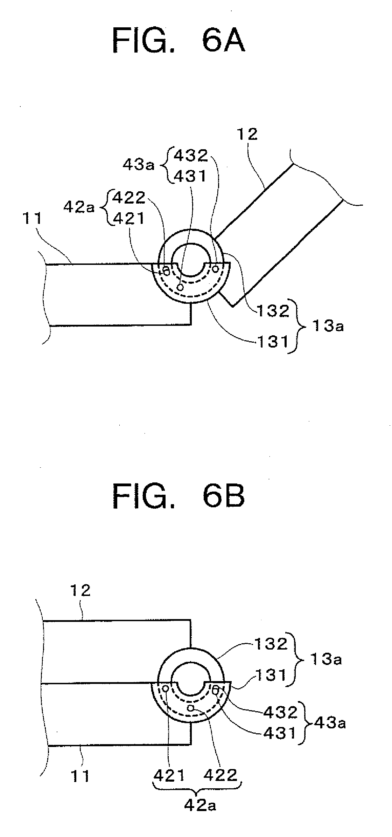

Fig. 5 is a perspective view showing the portable information terminal 10a in an intermediate state. Fig. 6A and Fig. 6B are enlarged side views showing the vicinity of a hinge 13a of the portable information terminal 10a in an open state and a closed state respectively.

In the portable information terminal 10a, an open state detecting switch 42a and a closed state detecting switch 43a are constituted of two sets of contacts (switches) disposed in a ratchet mechanism of the hinge 13a. Specifically, the hinge 13a is composed of a member 131 on a portable information terminal main body 11a side and a member 132 on a cover 12a side, and contacts 421, 431 and contacts 422, 432 are disposed on the members 131, 132 respectively.

When the portable information terminal 10a is in the open state, the contacts 421, 422 are in contact with each other, so that the open state is detected. When the portable information terminal 10a is in the closed state, the contacts 431, 432 are in contact with each other, so that the closed state is detected.

Incidentally, a triple-contact switch composed of three contacts is also usable in place of the open state detecting switch 42a and the closed state detecting switch 43a.

### (Third Embodiment)

A portable information terminal 10b according to a third embodiment of the present invention will be described.

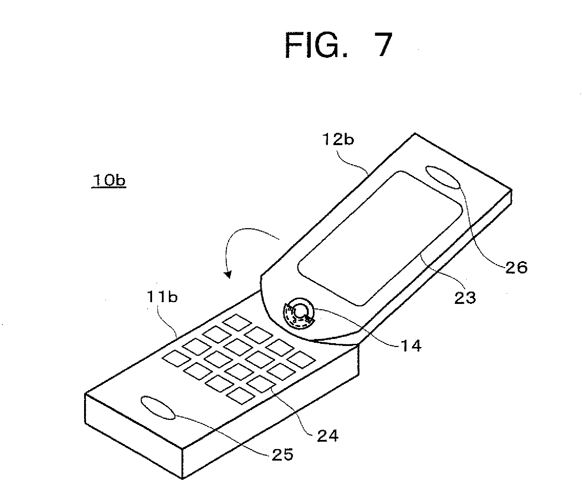

Fig. 7 is a perspective view showing the portable information terminal 10b in an open state. The portable information terminal 10b is a revolving cellular phone with a cover 12b revolvable relative to a portable information terminal main body 11b by a revolving mechanism 14.

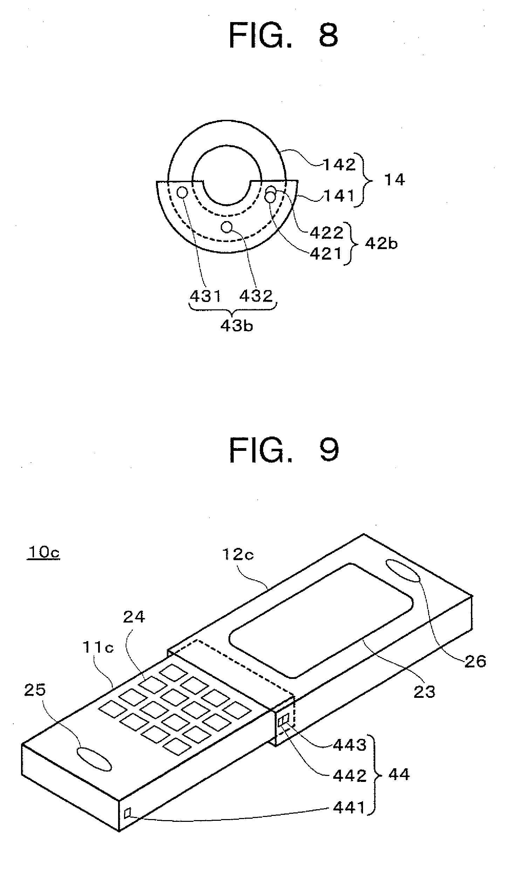

Fig. 8 is an enlarged view showing the revolving mechanism 14.

In the portable information terminal 10b, an open state detecting switch 42b and a closed state detecting switch 43b are constituted of two sets of contacts (switches) disposed in the revolving mechanism 14. Specifically, the revolving mechanism 14 is composed of a member 141 disposed on the portable information terminal main body 11b side and a member 142 disposed on the cover 12b side, and contacts 421, 431 and contacts 422, 432 are disposed on the members 141, 142 respectively.

When the portable information terminal 10b is in an open state, the contacts 421, 422 are in contact with each other, so that the open state is detected. When the portable information terminal 10b is in a closed state, the contacts 431, 432 are in contact with each other, so that the closed state is detected.

If a triple-contact switch is disposed in place of such two switches (four contacts) to detect the open state, the closed state, and the intermediate state of the portable information terminal 10b, it is also possible to protect a built-in hard disk from an impact.

These switches may of course be any one of a mechanical type, a magnetic type, and an electric type.

### (Fourth Embodiment)

A portable information terminal 10c according to a fourth embodiment of the present invention will be described.

Fig. 9 is a perspective view showing the portable information terminal 10c in an open state. The portable information terminal 10c is a sliding cellular phone with a cover 12c thereof slidable relative to a portable information terminal main body 11c.

Here, a triple-contact switch 44 using three contacts, namely, contacts 441, 442, 443 is used to detect an open state, a closed state, and an intermediate state of the portable information terminal 10c, so that a built-in hard disk can be protected from an impact.

The contacts 441, 442 are disposed on the portable information terminal main body 11c side, and the contact 443 is disposed on the cover 12c side. When the portable information terminal 10c is in the open state, the contacts 442, 443 are in contact with each other, and when the portable information terminal 10c is in the closed state, the contacts 441, 442 are in contact with each other, so that the open/closed state is detectable. In the intermediate state, the contacts 441, 442, 443 are not in contact with one another.

Needless to say, two switches (four contacts) may be used in place of this switch, and the switch may be any one of a mechanical type, a magnetic type, and an electric type.

### (Other Embodiments)

Embodiments of the present invention are not limited to the above-described embodiments, and any expansion and modification can be made. Expanded and changed embodiments are also included in a technical scope of the present invention.

## Claims

1. A portable information terminal, comprising:
a main body;
a cover openable/closable relative to said main body;
a magnetic disk device having a magnetic disk;
an open/closed state detecting unit that detects in which one of an open state, a closed state, and an intermediate state said cover is relative to said main body; and
a controller controlling an operation of said magnetic disk device based on a result of the detection by said open/closed state detecting unit.

2. The portable information terminal as set forth in claim 1,
wherein said open/closed state detecting unit comprises: a first detector that detects whether or not said cover is in the open state relative to said main body; and a second detector that detects whether or not said cover is in the closed state relative to said main body.

3. The portable information terminal as set forth in claim 1,
wherein said controller permits read/write of information from/to said magnetic disk when said open/closed state detecting unit detects that said cover is in one of the open state and the closed state, while prohibiting the read/write of the information from/to said magnetic disk when said open/closed state detecting unit detects that said cover is in the intermediate state.

4. The portable information terminal as set forth in claim 1, further comprising
a memory,
wherein, when said open/closed state detecting unit detects that said cover is in the intermediate state, said controller controls such that information is read/written from/to said memory instead of said magnetic disk.

5. The portable information terminal as set forth in claim 1,
wherein said controller controls such that the information of said memory is written to said magnetic disk when said open/closed state detecting unit detects that said cover has shifted from the intermediate state to one of the open state and the closed state.

6. The portable information terminal as set forth in claim 1, further comprising
a hinge revolvably connecting said cover to said main body.

7. The portable information terminal as set forth in claim 1, further comprising
a sliding mechanism slidably connecting said cover to said main body.

8. A control method of a portable information terminal that comprises: a main body; a cover openable/closable relative to the main body; and a magnetic disk device having a magnetic disk, and
the control method, comprising:
detecting in which one of an open state, a closed state, and
an intermediate state the cover is relative to the main body; and
controlling an operation of the magnetic disk device based on a result of the detection.

9. The control method of the portable information terminal as set forth in claim 8,
wherein said detecting includes: detecting whether or not the cover is in the open state relative to the main body; and detecting whether or not the cover is in the closed state relative to the main body.

10. The control method of the portable information terminal as set forth in claim 8,
wherein said controlling includes permitting read/write of information from/to the magnetic disk when the result of the detection indicates one of the open state and the closed state, while prohibiting the read/write of the information from/to the magnetic disk when the result of said detection indicates the intermediate state.

11. The control method of the portable information terminal as set forth in claim 8,
wherein the portable information terminal further includes a memory, and
wherein said controlling includes performing control such that the information is read/written from/to the memory instead of the magnetic disk when the result of said detection indicates the intermediate state.

12. The control method of the portable information terminal as set forth in claim 8,
wherein said controlling includes performing control such that the information of the memory is written to the magnetic disk when the result of said detection indicates a shift from the intermediate state to one of the open state and the closed state.

13. The control method of the portable information terminal as set forth in claim 8,
wherein the portable information terminal further includes a hinge revolvably connecting the cover to the main body.

14. The control method of the portable information terminal as set forth in claim 8,
wherein the portable information terminal further includes a sliding mechanism slidably connecting the cover to the main body.
